# EUROPÄISCHE PATENTANMELDUNG

(11) **EP 1 318 638 A2**
(43) Veröffentlichungstag der Anmeldung: **11.06.2003**
(21) Anmeldenummer: 02102578.8
(22) Anmeldetag: 14.11.2002
(51) Int. Cl.: H04L 25/06, H04L 25/49

(54) **Empfangsschaltung von flankencodierten Signalen unter Verwendung adaptiver Abtastung**

(30) Priorität: 16.11.2001 DE 10156111
(71) Anmelder: Philips Intellectual Property & Standards GmbH, 20099 Hamburg (DE); Koninklijke Philips Electronics N.V., 5621 BA Eindhoven (NL)
(72) Erfinder: Budde, Wolfgang. c/o Philips Int.Property GmbH., D-52088, Aachen (DE); Fuhrmann, Peter. c/o Philips Int.Property GmbH., D-52088, Aachen (DE)
(74) Vertreter: Volmer, Georg, Dipl.-Ing.

(57) **Zusammenfassung**

Die Erfindung bezeiht sich auf eine Empfangsschaltung zum Empfang von Nachrichtensignalen mit einem Abtaster zur Umwandlung des Nachrichtensignals in ein Abtastsignal,
einer Auswerteeinheit zur Dekodierung und Fehlerprüfung des Abtastsignals und einer Steuereinheit zur Steuerung des Abtastverfahrens in Abhängigkeit der Fehlerprüfung des Abtastsignals.

## Beschreibung

Die Erfindung bezieht sich auf eine Empfangsschaltung zum Empfang von Nachrichtensignalen mit einem Abtaster zur Umwandlung des Nachrichtensignals in ein Abtastsignal.

Unter einem Nachrichtensignal wird ein Signal verstanden, welches in beliebiger Form codierte Informationen aufweist. Ein Abtaster ist ein Element, welches das Nachrichtensignal zu vorgebbaren Zeitpunkten abtastet und in ein Abtastsignal umwandelt.

Bei der Übertragung von Nachrichtenkanälen oder vor der Aufzeichnung auf einem Datenträger werden Nachrichten bzw. Datensätze typischerweise so codiert, dass Fehler, die durch Störungen im Kanal oder auf dem Datenträger verursacht werden, beim Empfang der Nachricht bzw. des Datensatzes erkannt oder gar korrigiert werden können.

Durch Ungenauigkeiten in der Bit-Synchronisierung zwischen Sender und Empfänger können beispielsweise Phasenfehler entstehen. Ein bekanntes Verfahren zur Vermeidung von Phasenfehlern ist die flankenweise Nachsynchronisation, d. h. mit dem Empfang einer jeden Nachrichtenflanke wird das Bit-Timing des Empfängers an den empfangenen Datenstrom angepasst. Ein solches Verfahren, bei dem ausgehend von einer erkannten Flanke die Dauer einer Bitzeit angepasst wird, ist z.B. aus der CAN-Specification Version 1.2. Robert Bosch GmbH, 1990. bekannt. Dieses Verfahren kann jedoch bei stark verrauschten Eingangssignalen zu einem Ausrasten der Bit-Synchronisation und damit zum Verlust des Nachrichteninhalts führen.

Es ist Aufgabe der Erfindung, eine Empfangsschaltung sowie ein diesbezügliches Verfahren aufzuzeigen, welche einen verbesserten Nachrichtenempfang ermöglichen.

Diese Aufgabe wird für die Empfangsschaltung gelöst durch eine Empfangsschaltung zum Empfang von Nachrichtensignalen mit einem Abtaster zur Umwandlung des Nachrichtensignals in ein Abtastsignal, einer Auswerteeinheit zur Dekodierung und Fehlerprüfung des Abtastsignals und einer Steuereinheit zur Steuerung des Abtastverfahrens in Abhängigkeit der Fehlerprüfung des Abtastsignals.

Der Erfindung liegt die Idee zugrunde, das in dem Abtaster durchgeführte Abtastverfahren an die Charakteristika des empfangenen Nachrichtensignals anzupassen. Hierzu wird in einer Auswerteeinheit eine Fehlerprüfung des Abtastsignals durchgeführt, auftretende Fehler werden an eine Steuereinheit übermittelt, und die Steuereinheit steuert das Abtastverfahren in Abhängigkeit der von der Auswerteeinheit festgestellten Fehler. Dadurch kann der Empfänger aktiv und flexibel auf sich verändernde Eigenschaften des empfangenen Nachrichtensignals reagieren. Eine Änderung der Eigenschaften des empfangenen Nachrichtensignals tritt insbesondere in Folge sich verändernder Kanaleigenschaften auf. Ein Nachrichtenkanal unterliegt verschiedensten Fehlereinflüssen, welche auf das zu übertragende Nachrichtensignal einwirken und dieses in ihren Eigenschaften verändern.

Als grundlegende Fehlerkategorien, welche bei der Übertragung von Nachrichten über einen Nachrichtenkanal auftreten, lassen sich Amplituden- und Phasenfehler unterscheiden. Während Amplitudenfehler sich typischerweise als Einzel- oder Mehrfach-Bit-Fehler auswirken, können Phasenfehler ganze Nachrichteninhalte zerstören, z. B. invertieren. Mittels der erfindungsgemäßen Empfangsschaltung ist es möglich, z. B. bei auftretenden Amplitudenfehlern ein erstes Abtastverfahren zu verwenden und bei auftretenden Phasenfehlern auf ein anderes zweites Abtastverfahren umzuschalten. Je nachdem ob Amplituden- oder Phasenfehler überwiegen, kann das jeweils günstigere Abtastverfahren ausgewählt werden. Mittels einer derartigen adaptiven Abtastung wird die Wahrscheinlichkeit, mit der die ursprüngliche Nachricht aus dem empfangenen Signal rekonstruiert werden kann, deutlich erhöht.

Grundsätzlich ist diese Erfindung in allen Anwendungsbereichen der Kommunikations- und Speichertechnik anwendbar. Insbesondere sicherheitskritische Anwendungen in der Automobiltechnik, Industrieautomatisierung, Medizintechnik usw. profitieren von der adaptiven Abtastung in Hinsicht auf den für die angestrebte Sicherheit zu leistenden Aufwand. Vorzugsweise ist gemäß Anspruch 2 in dem Abtaster als erstes Abtastverfahren eine Abtastung mit einem starren Abtastraster implementiert. Bei einem starren Abtastraster wird das empfangene Nachrichtensignal in periodisch fest vorgegebenen Abständen abgetastet. Als zweites Abtastverfahren ist gemäß Anspruch 2 in dem Abtaster eine Bit-Weise nach Synchronisation vorgesehen, d. h. bei jedem einzelnen empfangenen Bit wird eine Synchronisation des empfangenen Nachrichtensignals mit dem Abtastraster des Abtasters durchgeführt. Das erste Abtastverfahren mit einem starren Abtastraster könnte beispielsweise als Grundverfahren in dem Abtaster implementiert sein, d. h. bei Empfang eines Nachrichtensignals wird zunächst immer jeweils eine Abtastung mit einem starren Abtastraster durchgeführt. Erst wenn die Auswerteeinheit Fehlermeldungen an die Steuereinheit liefert, entscheidet die Steuereinheit in Abhängigkeit dieser Fehlermeldungen, ob eine Umschaltung auf das zweite Abtastverfahren, z. B. das Abtastverfahren mit einer bitweisen Nachsynchronisation, Erfolg versprechender ist. In diesem Fall wird eine Umschaltung auf das zweite Abtastverfahren vorgenommen.

Besonders vorteilhaft ließe sich die Empfangsschaltung zum Empfang von flankencodierten Signalen einsetzen. Flankencodierte Signale sind Signale, bei denen die Information, welche das Nachrichtensignal aufweist, in der zeitlichen Abfolge der Flankenwechsel enthalten ist. Flankencodierte Signale sind besonders empfindlich gegenüber Phasenfehlern. Bei derartigen Signalen wäre es daher beispielsweise vorteilhaft, als Grundabtastverfahren eine flankenweise bzw. bitweise Nachsynchronisation vorzusehen. Ein derartiges Verfahren kann jedoch bei stark verrauschten Eingangssignalen zu einem Ausrasten der Bit-Synchronisation und damit zum Verlust des Nachrichteninhalts führen. In einem derartigen Fall würde dies von einer Auswerteeinheit erkannt und auf ein Verfahren mit einem starren Abtastschema umgeschaltet. Besondere Vorteile bietet die erfindungsgemäße Empfangsschaltung für den Empfang von Xerxes-codierten Signalen.

Bei der vorteilhaften Ausgestaltung der Erfindung nach Anspruch 4 ist der Abtaster als Analog-Digitalwandler ausgeführt. Ein derartiger Analog-Digitalwandler ermöglicht mehr Qualitätsanalyse. Mittels eines derartigen Analog-Digitalwandlers ist es möglich, bei flachen Signalflanken aus dem Verlauf des Signals die Flankenposition zu schätzen. Dies ist insbesondere bei flankencodierten Signalen vorteilhaft. Dem Analog-Digitalwandler sollte ein Bandpassfilter vorgeschaltet sein, um Aliasing zu vermeiden.

Als Alternative kann der Abtaster gemäß Anspruch 5 vorteilhaft als Schwellwertentscheider ausgeführt werden. Ein derartiger Schwellwertentscheider ist besonders einfach und kostengünstig zu realisieren. Der Schwellwertentscheider wird vorzugsweise mit n-fachen Oversampling realisiert. Als Ausgangssignal liefert ein derartiger Schwellwertentscheider eine Folge von Nullen und Einsen.

Gemäß Anspruch 6 ist es vorteilhaft, nicht sofort bei einem auftretenden Fehler auf ein anderes Abtastverfahren umzuschalten, sondern erst mehrere Fehlermeldungen abzuwarten und auszuwerten, um danach ggf. eine Umschaltung vorzunehmen. Dadurch wird vermieden, dass singuläre bzw. kurzzeitige Störungen auf dem Übertragungskanal bereits zu einer Umschaltung auf ein anderes Abtastverfahren führen.

Die Auswerteeinheit besteht gemäß Anspruch 8 vorzugsweise aus einer Dekodiereinheit und einer nachgeschalteten Prüfeinheit. Die Dekodiereinheit decodiert das von dem Abtaster gelieferte Abtastsignal. Zusätzlich kann die Dekodiereinheit auch dazu vorgesehen sein, eine Überprüfung des Abtastsignals auf Codeebene vorzunehmen. Eine Überprüfung auf Codeebene bedeutet, dass der Dekodierer Code-Verletzungen aller Art anzeigt. Dem Kodierer nachgeschaltet ist vorzugsweise eine Prüfeinheit, welche eine Fehlerprüfung auf Nachrichtenebene bzw. Datenebene durchführt. Dies kann beispielsweise eine CRC (Cyclic Redundancy Check)-Prüfung sein.

Die Erfindung ist für das Verfahren gelöst durch ein Verfahren mit den Merkmalen des Anspruchs 9.

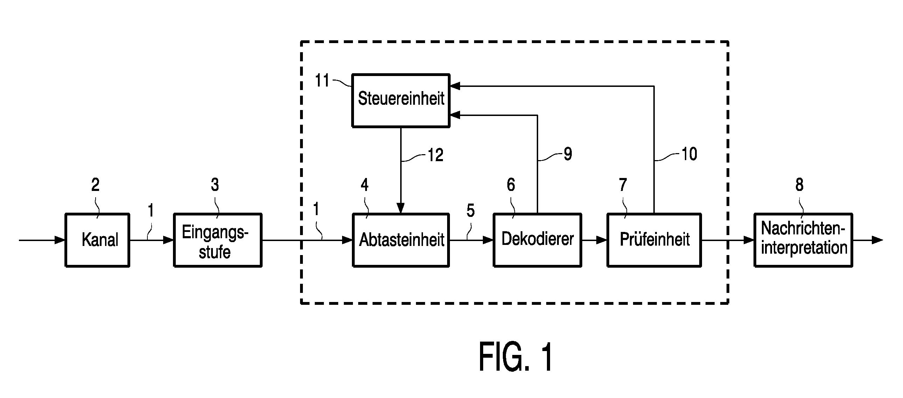

Ein Ausführungsbeispiel der Erfindung wird nachfolgend anhand der einzigen Figur der Zeichnung näher erläutert.

Die einzige Figur der Zeichnung zeigt eine Empfangsschaltung zum Empfang von Nachrichtensignalen. Ein Nachrichtensignal 1, das über einen Nachrichtenkanal 2 übertragen wurde, wird einer Eingangsstufe 3 der Empfangsschaltung zugeführt. Die Eingangsstufe 3 umfasst beispielsweise einen HF- und einen ZF-Mischer sowie diverse Filterschaltungen. Die Eingangsstufe 3 führt eine analoge Vorverarbeitung des empfangenen Nachrichtensignals 1 durch. Das von der Eingangsstufe 3 analog vorverarbeitete Nachrichtensignal 1 wird einer Abtasteinheit 4 zugeführt und in ein Abtastsignal 5 umgewandelt. Der Abtasteinheit 4 ist ein Dekodierer 6 nachgeschaltet. Dem Dekodierer 6 ist eine Prüfeinheit 7 nachgeschaltet. Der Prüfeinheit 7 ist schließlich eine Nachrichteninterpretationseinheit 8 nachgeschaltet. Der Dekodierer 6 liefert ein Fehlersignal 9 und die Prüfeinheit 7 ein Fehlersignal 10 an eine Steuereinheit 11. Die Steuereinheit 11 liefert ein Steuersignal 12 an die Abtasteinheit 4.

Die Abtasteinheit 4 kann als Schwellwertentscheider mit n-fachen Oversampling realisiert werden. Alternativ kann ein Analog-Digitalwandler mit geringer Auflösung als Abtasteinheit benutzt werden. Dieser ermöglicht mehr Qualitätsanalyse und bei flankencodierten Signalen ist es z. B. möglich, auch bei flachen Signalflanken aus dem Verlauf des Signals die Flankenposition zu schätzten. Der Dekodierer 6 decodiert das von der Abtasteinheit 4 gelieferte Abtastsignal 5 und führt zusätzlich eine Überprüfung des Abtastsignals auf Codeebene hinsichtlich möglicher Codeverletzungen durch. Stellt der Dekodierer 6 derartige Codeverletzungen fest, liefert er ein Fehlersignal 9 an die Steuereinheit 11. Die dem Dekodierer 6 nachgeschaltete Prüfeinheit 7 führt eine Überprüfung auf Nachrichtenebene durch, d. h. eine Prüfung auf Ebene des rekonstruierten Bit-Stroms. Dies kann beispielsweise mittels einer CRC-Prüfung (Cyclic Redundancy Check) erfolgen. Stellt die Prüfeinheit 7 einen Fehler fest, so liefert sie ein Fehlersignal 10 an die Steuereinheit 11. Die Nachrichteninterpretationseinheit 8 führt eine weitere Nachrichtenverarbeitung bzw. Datenverarbeitung durch. Die Steuereinheit 11 steuert in Abhängigkeit der Fehlersignale 9 und 10 das in der Abtasteinheit 4 durchgsführte Abtastverfahren. Als erstes Abtastverfahren kann in der Abtasteinheit 4 beispielsweise eine Abtastung mit einem starren Abtastraster implementiert sein. Dies bedeutet, dass die Abtasteinheit 4 das ihr zugeführte Nachrichtensignal 1 in zeitlichen Abständen mit einer festen Periodendauer abtastet und in das Abtastsignal 5 umwandelt. Als zweites Abtastverfahren kann in der Abtasteinheit 4 beispielsweise eine Abtastung mit eine bitweisen Nachsynchronisation implementiert werden. Dies bedeutet, dass mit dem Empfang eines jeden Bits bzw. bei flankencodierten Signalen mit dem Empfang einer jeden Nachrichtenflanke das Bit-T i-ming des Empfängers an den empfangenen Datenstrom angepasst wird. Zusätzlich können noch weiter Abtastverfahren in der Abtasteinheit 4 implementiert werden. Die Steuereinheit 11 ist nun dazu vorgesehen, das jeweils beste und für einen optimalen Nachrichtenempfang geeignetste Abtastverfahren auszuwählen. Hierzu wertet es die vom Dekodierer 6 und der Prüfeinheit 7 gelieferten Fehlersignale 9 und 10 aus. Falls ein oder mehrere Fehlersignale geliefert werden, ist dies ein Indiz dafür, dass das gegenwärtig durchgeführte Abtastverfahren nicht optimal ist. Die Steuereinheit 11 wählt dann ein besser geeignetes Abtastverfahren aus und liefert ein entsprechendes Steuersignal 12 an die Abtasteinheit 4. Vorzugsweise wird nicht bei dem ersten Auftreten eines Fehlers sofort umgeschaltet, sondern es werden mehrere aufeinander folgende Fehlersignale ausgewertet, und erst dann wird eine Umschaltung veranlasst. Insbesondere bei singulären Fehlerereignissen ist es vielfach nicht sinnvoll, sofort auf ein anderes Abtastverfahren umzuschalten.

Die in der Abtasteinheit 4 durchgeführte Abtastung kann somit dynamisch an die aktuellen Verhältnisse auf dem Kanal 2 angepasst werden. Als Standard-Abtastverfahren kann in der Abtasteinheit 4 beispielsweise die Abtastung mit starrem Abtastraster vorgesehen sein. Bei mangelnder Synchronisation zwischen Sender und Empfänger melden der Dekodierer 6 und/oder die Prüfeinheit 7 Fehlersignale an die Steuereinheit, und die Steuereinheit kann beispielsweise veranlassen, dass auf das Abtastverfahren mit einer bitweisen Nachsynchronisation umgeschaltet wird.

Die vorliegende Erfindung kann nicht nur für die Nachrichtenübertragung über Übertragungskanäle angewendet werden, sondern in analoger Weise ist es auch möglich, die erfindungsgemäße Empfangsschaltung bzw. das erfindungsgemäße Verfahren für die Aufzeichnung von Daten auf einem Speichermedium bzw. für das Auslesen von Daten von einem Speichermedium zu verwenden. Der in der Figur dargestellte Kanal 2 würde in diesem Fall ersetzt durch ein Speichermedium, z. B. eine CD oder eine DVD. Die Eingangsstufe 3 wäre in diesem Fall eine optische Sende- und Empfangseinheit.

## Patentansprüche

1. Empfangsschaltung zum Empfang von Nachrichtensignalen mit einem Abtaster zur Umwandlung des Nachrichtensignals in ein Abtastsignal, einer Auswerteeinheit zur Dekodierung und Fehlerprüfung des Abtastsignals und einer Steuereinheit zur Steuerung des Abtastverfahrens in Abhängigkeit der Fehlerprüfung des Abtastsignals.

2. Empfangsschaltung nach Anspruch 1,
**dadurch gekennzeichnet,**
**dass** in dem Abtaster als erstes Abtastverfahren eine Abtastung mit einem starren Abtastraster und als zweites Abtastverfahren eine Abtastung mit einer bitweisen Nachsynchronisation vorgesehen ist.

3. Empfangsschaltung nach Anspruch 1,
**dadurch gekennzeichnet,**
**dass** das codierte Nachrichtensignal ein flankencodiertes Signal ist.

4. Empfangsschaltung nach Anspruch 1,
**dadurch gekennzeichnet,**
**dass** der Abtaster als Analog-Digital-Wandler ausgeführt ist.

5. Empfangsschaltung nach Anspruch 1,
**dadurch gekennzeichnet,**
**dass** der Abtaster als Schwellwertentscheider ausgeführt ist.

6. Empfangsschaltung nach Anspruch 1,
**dadurch gekennzeichnet,**
**dass** eine Umschaltung auf ein anderes Abtastverfahren erst nach einer vorgebbaren Anzahl von Fehlerindikationen vorgesehen ist.

7. Empfangsschaltung nach Anspruch 3,
**dadurch gekennzeichnet,**
**dass** das flankencodierte Signal ein Xerxes-codiertes Signal ist.

8. Empfangsschaltung nach Anspruch 1,
**dadurch gekennzeichnet,**
**dass** die Auswerteeinheit eine Dekodiereinheit und eine Prüfeinheit aufweist und dass die Dekodiereinheit eine Fehlerprüfung hinsichtlich Codeverletzungen durchführt und die Prüfeinheit eine Fehlerprüfung auf Nachrichtenebene ist.

9. Verfahren zum Empfang von codierten Nachrichtensignalen, wobei die Nachrichtensignale mittels Abtastung in ein Abtastsignal umgewandelt werden, wobei die Abtastsignale dekodiert werden und eine Überprüfung auf Fehler durchgeführt wird, wobei eine Änderung das Abtastverfahrens der Abtastung in Abhängigkeit der Fehlerprüfung des Abtastsignals vorgesehen ist.
